# EUROPEAN PATENT APPLICATION

(11) **EP 4 365 321 A1**
(43) Date of publication of application: **08.05.2024**
(21) Application number: 22869942.7
(22) Date of filing: 12.09.2022
(51) Int. Cl.: C21D 9/573, C22C 38/00, C22C 38/60, C21D 1/00, C21D 1/63

(54) **QUENCHING APPARATUS, CONTINUOUS ANNEALING FACILITY, QUENCHING METHOD, STEEL SHEET PRODUCTION METHOD, AND PLATED STEEL SHEET PRODUCTION METHOD**

(30) Priority: 16.09.2021 JP 2021150949
(71) Applicant: JFE Steel Corporation, Tokyo 100-0011 (JP)
(72) Inventor: YOSHIMOTO, Soshi, Tokyo 100-0011 (JP); KOBAYASHI, Hirokazu, Tokyo 100-0011 (JP)
(74) Representative: Haseltine Lake Kempner LLP
(86) International application number: PCT/JP2022/034061
(87) International publication number: WO 2023/042795

(57) **Abstract**

An object of the present invention is to provide a quenching apparatus, and a continuous annealing facility; and a quenching method, a method for manufacturing a steel sheet, and a method for manufacturing a coated steel sheet that, even when a metal sheet before quenching is already warped, enable suppression of occurrence of warpage in the metal sheet after being quenched.

A quenching apparatus 1 includes a cooling device 10 that performs quenching by cooling a metal sheet S with a cooling fluid, shape correction rolls 30 that are provided beside the front surface and the back surface of the metal sheet S and press, in the thickness direction of the metal sheet S, the metal sheet S before being quenched, and a pressing control device 40 that controls, based on the shape of the metal sheet S before quenching, a pressing of each of the shape correction rolls 30.

## Description

### Technical Field

The present invention relates to a quenching apparatus that performs quenching while continuously passing a metal sheet, a continuous annealing facility, a quenching method, a method for manufacturing a steel sheet, and a method for manufacturing a coated steel sheet.

### Background Art

In manufacture of metal sheets including steel sheets, a continuous annealing facility that performs annealing while continuously passing a metal sheet makes materials, for example, by heating and then cooling a metal sheet to promote phase transformation. In recent years, in the automobile industry, there has been an increasing demand for thinned high tensile steel sheets (Haiten) for achieving simultaneously the weight reduction and the crash safety of a vehicle body.

When a high tensile steel sheet is manufactured, a technique for cooling the steel sheet rapidly is important. For example, one of the techniques capable of cooling a steel sheet at the fastest cooling rate is a water quenching method. In the water quenching method, a steel sheet is quenched as follows: a heated steel sheet is immersed in water, and, at the same time, cooling water is sprayed onto the steel sheet from a quenching nozzle provided in the water. When a steel sheet is quenched, there arises a problem that a defect in the shape of the steel sheet, such as warpage or wavelike deformation, may occur.

Various approaches have been proposed to prevent such a shape defect that occurs when a steel sheet is quenched (for example, refer to Patent Literatures 1 and 2). Patent Literature 1 discloses a structure in which, cooling water spray nozzles are installed in multiple stages in immersion water used for water-cooling a heated strip, and nozzle headers are disposed so as to be separated from one another in a travelling direction of the strip. This structure can prevent a lateral flow that occurs at existing multi-stage slit nozzles and can thus achieve uniform cooling in the width direction of the strip.

In addition, Patent Literature 2 discloses an approach of providing, at the front and the rear of a quenching part, bridle rolls serving as a tension changing unit that can change the tension applied to a steel sheet in a quenching process, for the purpose of suppressing wavelike deformation of a metal sheet that occurs during quenching at a continuous annealing furnace.

### Citation List

### Patent Literature

Patent Literature 1: Japanese Unexamined Patent Application Publication No. 59-153843
Patent Literature 2: Japanese Unexamined Patent Application Publication No. 2011-184773

### Summary of Invention

### Technical Problem

However, the method disclosed in Patent Literature 1 has a problem that an effect of shape correction is insufficient when a metal sheet before quenching is already warped. In addition, in the method disclosed in Patent Literature 2, a rupture in a metal sheet may be caused because a large tension is applied to a high-temperature metal sheet. There is a further problem that the shape of a metal sheet cannot be improved. This is because a great degree of thermal crown occurs in the bridle roll that is provided at the front of the quenching part and comes into contact with a high-temperature metal sheet, the bridle roll and the metal sheet are thereby in contact with one another nonuniformly in the width direction, and, as a result, the metal sheet buckles or has a flaw.

The present invention has been made to solve such problems, and an object thereof is to provide a quenching apparatus, and a continuous annealing facility; and a quenching method, a method for manufacturing a steel sheet, and a method for manufacturing a coated steel sheet that, even when a metal sheet before quenching is already warped, enable suppression of occurrence of warpage in the metal sheet after quenching.

### Solution to Problem

[1] A quenching apparatus that cools a metal sheet, including: a cooling device that performs quenching by cooling the metal sheet with a cooling fluid; shape correction rolls that are provided beside a front surface and a back surface of the metal sheet and press, in a thickness direction of the metal sheet, the metal sheet before being quenched; and a pressing control device that sets, based on a shape of the metal sheet before quenching, a pressing quantity of each of the shape correction rolls.
[2] The quenching apparatus according to the item [1], in which the pressing control device causes the shape correction roll beside the front surface of the metal sheet to perform pressing when the metal sheet before quenching has a warp curving to the front surface side, and causes the shape correction roll beside the back surface of the metal sheet to perform pressing when the metal sheet before quenching has a warp curving to the back surface side.
[3] The quenching apparatus according to the item [1] or [2], further including a shape measurement device that measures the shape of the metal sheet before being quenched.
[4] The quenching apparatus according to the item [3], in which the shape measurement device has a function of measuring a warpage quantity of the metal sheet, and the pressing control device sets a measured warpage quantity of the metal sheet as the pressing quantity and controls the shape correction roll to perform pressing.
[5] The quenching apparatus according to any one of the items [1] to [4], in which the shape correction rolls beside the front surface and the back surface are disposed such that a central axis-to-central axis distance thereof is 100 mm or more and 1000 mm or less, and a distance between a start position of cooling performed by the cooling device and each of the shape correction rolls is within 500 mm.
[6] A continuous annealing facility including the quenching apparatus according to any one of the items [1] to [5] beside an exit of a soaking zone.
[7] A quenching method for performing quenching by cooling a metal sheet with a cooling fluid, the quenching method including: grasping a shape of the metal sheet before being quenched; and, based on the grasped shape of the metal sheet, pressing the metal sheet in a thickness direction by using shape correction rolls provided beside a front surface and a back surface of the metal sheet.
[8] The quenching method according to the item [7], including, in the pressing the metal sheet in the thickness direction, causing the shape correction roll beside the front surface of the metal sheet to perform pressing when the metal sheet before quenching has a warp curving to the front surface side, and causing the shape correction roll beside the back surface of the metal sheet to perform pressing when the metal sheet before quenching has a warp curving to the back surface side.
[9] The quenching method according to the item [8], including, in the grasping the shape of the metal sheet, grasping a warpage quantity and a warpage direction of the metal sheet, and, in the pressing the metal sheet, causing the shape correction roll to perform pressing with the warpage quantity of the metal sheet being given as a pressing quantity.
[10] A method for manufacturing a steel sheet, the method including, by using the quenching method according to any one of the items [7] to [9], quenching a steel sheet that is the metal sheet.
[11] A method for manufacturing a coated steel sheet, the method including performing a coating treatment on a cold rolled steel sheet manufactured by using the method for manufacturing a steel sheet according to the item [10].
[12] The method for manufacturing a coated steel sheet, according to the item [11], in which the coating treatment is any one of a hot-dip zinc coating treatment, an electro zinc coating treatment, and a hot-dip zinc coating and alloying treatment.

### Advantageous Effects of Invention

According to the present invention, the metal sheet before quenching is pressed in the thickness direction according to the shape of the metal sheet. Thus, in the case where quenching is performed while the metal sheet is continuously passed, even when the metal sheet before quenching is warped, warpage can be suppressed from occurring in the metal sheet after quenching.

### Brief Description of Drawings

[Fig. 1] Fig. 1 is a schematic view of a quenching apparatus according to an embodiment of the present invention.
[Fig. 2] Fig. 2 is a schematic view illustrating a state where a shape correction roll is pressing a metal sheet.
[Fig. 3] Fig. 3 is a schematic view illustrating a state where a shape correction roll is pressing the metal sheet.
[Fig. 4] Fig. 4 is a schematic view illustrating an example of the definition of a warpage quantity of the metal sheet.

### Description of Embodiments

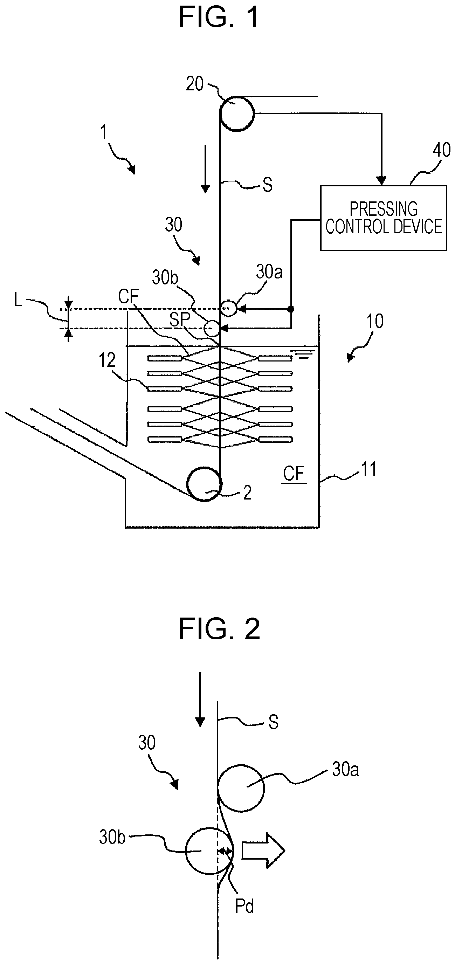

Embodiments of the present invention will be described based on the drawings. Fig. 1 is a schematic view of an example of a quenching apparatus according to an embodiment of the present invention. Note that such a quenching apparatus 1 of Fig. 1 performs quenching of, for example, as a metal sheet S, a steel material and is applied to a cooling facility provided beside an exit of a soaking zone of a continuous annealing facility such as a continuous annealing furnace. The quenching apparatus 1 of Fig. 1 includes a cooling device 10 that cools the metal sheet S. The cooling device 10 is a device for cooling a metal sheet with refrigerant CF and includes: a cooling tank 11 storing the refrigerant CF; and plural jet nozzles 12 that are installed in the cooling tank 11 and from which the refrigerant CF is sprayed onto a front surface and a back surface of the metal sheet S.

The cooling tank 11 stores therein water serving as the refrigerant CF, and the metal sheet S, for example, enters to be immersed in the water from the upper side of the cooling tank 11 in a sheet passing direction. The refrigerant CF in the cooling tank 11 is kept at a water temperature suitable for quenching. For example, the water temperature in the cooling tank 11 is preferably more than 0°C and 50°C or less, particularly preferably 10°C or more and 40°C or less. After a portion of the refrigerant CF in the cooling tank 11 is sent to a cooling facility such as an external cooling tower and is then cooled, the refrigerant CF after the cooling is returned into the cooling tank 11, and the water temperature in the cooling tank 11 is thereby prevented from rising. Note that a sink roll 2 for changing the sheet passing direction of the metal sheet S is installed in the cooling tank 11. The sheet passing direction is a transport direction of the metal sheet S.

The plural jet nozzles 12 are installed beside both surfaces of the metal sheet and arranged in the sheet passing direction of the metal sheet S. Note that the jet nozzles 12 are desirably arranged beside the front surface and the back surface of the metal sheet S in a symmetrical manner and are each preferably a slit nozzle to obtain a more uniform cooling capacity in the width direction. Consequently, the metal sheet S is cooled by the refrigerant CF stored in the cooling tank 11 and by the refrigerant CF sprayed from the plural jet nozzles 12.

As Fig. 1 illustrates, cooling the metal sheet S by using both the cooling tank 11 and the plural jet nozzles 12 stabilizes the boiling state of the surfaces of the metal sheet S and enables a uniform shape control. Note that, although the case where the cooling device 10 includes the cooling tank 11 and the plural jet nozzles 12 is illustrated in Fig. 1, the metal sheet S may be cooled, for example, only by the cooling tank 11 without the jet nozzles 12. Moreover, the cooling device 10 may cool the metal sheet S by, for example, misting, water-jet cooling or gas cooling using only nozzles. In addition, although the case of water quenching using water serving as the refrigerant CF is illustrated, oil cooling using oil serving as the refrigerant CF may alternatively be adopted. The fluid that is stored in the cooling tank 11 and jets from the jet nozzles 12 may be any cooling fluid such as the refrigerant CF. Moreover, although the case where the plural jet nozzles 12 are installed in the cooling tank 11 is illustrated in Fig. 1, the cooling method is not limited thereto and may be any approach enabling cooling of the metal sheet S in a desired temperature range.

Here, when the metal sheet S before quenching is already warped, the metal sheet S after quenching may remain warped, or even worse, quenching the warped metal sheet S may worsen the warpage. Thus, it is desired to suppress warpage of the metal sheet S before quenching from occurring, and it is further desired to correct, through quenching, the warpage of the metal sheet S before being quenched. Thus, the quenching apparatus 1 of Fig. 1 corrects, according to the shape of the metal sheet S before quenching, the shape of the metal sheet S by pressing the metal sheet S before being quenched. Here, the "shape" of the metal sheet S includes a "warpage direction" and a "warpage quantity". The "warpage direction" has the same meaning as an "outward-curving warped shape" of the metal sheet S.

A method for grasping the shape of the metal sheet S before being quenched is not specifically limited and may be any method enabling a grasp of the warpage direction and the warpage quantity of the metal sheet S. The shape of the metal sheet S before quenching may be calculated, based on the shape measured at any position in a path through which the metal sheet before quenching passes, by using a physical model including an annealing condition of the metal sheet S until just before quenching and a transport condition of the metal sheet S. In addition, the shape of the metal sheet S before quenching may be predicted by using a prediction model using a machine learning model. A shape measurement device may be provided just before quenching to measure the shape of the metal sheet S.

In addition, based on the "warpage direction" and the "warpage quantity" obtained through the measurement of the shape of the metal sheet S (leading material) after being quenched, the shape of a following material before quenching may be estimated. Specifically, an influence of the warp existing before quenching may be judged to be present when the measured warpage quantity of the metal sheet S (leading material) after quenching is larger than the average of the past manufacturing results (the warpage quantities after quenching), and the warpage quantity and the warpage direction of the metal sheet S (following material) before quenching may be estimated. Relative to the following material subjected to the estimation, the direction and the quantity of pressing by the shape correction roll may be adjusted.

Here, when the degree of warpage of the metal sheet S before quenching can be quantitively grasped, as described below, the pressing quantities of a back-side pressing roll 30a and a front-side pressing roll 30b may be determined based on the grasped warpage quantity. Note that, when the degree of warpage of the metal sheet S before quenching cannot be quantitively grasped, the pressing quantities of the back-side pressing roll 30a and the front-side pressing roll 30b may be determined based on the data of the past manufacturing results including the pressing quantities of the back-side pressing roll 30a and the front-side pressing roll 30b and the warpage quantities of the metal sheet S after quenching (more flattened shape) corresponding to the pressing quantities. In addition, the warpage direction of the metal sheet S before quenching tends to reflect the shape of a base sheet positioned on the entrance side of the continuous annealing furnace; thus, when, for example, a warped shape of the base sheet can be detected in advance, the direction and the quantity of the pressing to be performed by the shape correction roll may be adjusted based on the information.

Hereinafter, an embodiment using a shape measurement device to grasp the shape of the metal sheet S will be described. The quenching apparatus 1 of Fig. 1 includes a shape measurement device 20 having a function of measuring the shape of a metal sheet before being quenched, shape correction rolls 30, and a pressing control device 40 that controls the pressing of each of the shape correction rolls 30 based on the shape of the metal sheet S measured by the shape measurement device 20. The shape measurement device 20 is constituted by, for example, a shape measurement roll, and a product called a BFI shape roll from Friedrich Vollmer Feinmessgeraetebau GmbH can specifically be used. Plural piezoelectric sensors are provided in the shape measurement device 20 in the width direction, and the metal sheet S can be measured by being passed through on the shape measurement device 20. The shape measurement device 20 is a device that measures, as the shape of the metal sheet S, the warpage direction of the metal sheet S before quenching, preferably the warpage direction and the warpage quantity. Although the case where the shape measurement device 20 is constituted by the shape measurement roll is illustrated in Fig. 1, this is not the only option, and the shape of the metal sheet S before quenching may be measured by using a known technique such as measurement with a camera or laser measurement.

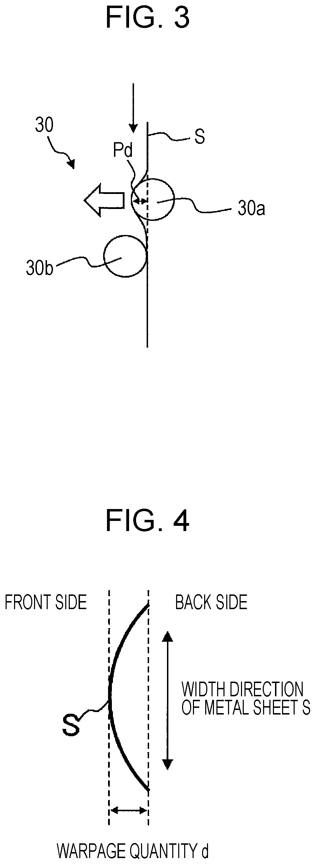

Figs. 2 and 3 are each a schematic view illustrating a state where the shape correction roll 30 is pressing the metal sheet S. The shape correction rolls 30 include the back-side pressing roll 30a that presses the metal sheet S from the back surface side and the front-side pressing roll 30b that presses the metal sheet S from the front surface side. The back-side pressing roll 30a and the front-side pressing roll 30b are arranged in a staggered manner in the sheet passing direction. The back-side pressing roll 30a and the front-side pressing roll 30b are made of a material having excellent thermal conductivity and sufficient strength to resist a load applied when the metal sheet S is held and applied with pressure. Examples of such a material used for the back-side pressing roll 30a and the front-side pressing roll 30b include SUS304 and SUS310 prescribed in JISG4304 of the Japanese Industrial Standards: "Hot-rolled stainless steel plate, sheet and strip" and include ceramics.

In Fig. 1, a central axis-to-central axis distance L between the back-side pressing roll 30a and the front-side pressing roll 30b is desirably set such that the pressing rolls are not in contact with one another during pressing and is preferably, for example, 100 mm or more and 1000 mm or less. When the central axis-to-central axis distance L is less than 100 mm, there is concern about a trouble that pressing prevents the metal sheet S from being passed while being gripped. On the other hand, when the central axis-to-central axis distance L is more than 1000 mm, no restraining force is obtained, and warpage thereby remain even after quenching.

The distance between the position of the center of the front-side pressing roll 30b disposed closer to the cooling device 10 and a cooling start point SP is preferably within 500 mm. This is because, when the distance between a correction position of the shape of the metal sheet S and the cooling start point SP where the temperature is at a martensitic transformation temperature is excessively long, an effect of suppressing out-of-plane deformation during cooling is lessened. Moreover, in view of interference with the cooling facility, the position of the center of the front-side pressing roll 30b is preferably at a distance of 50 mm or more from the cooling start point. Moreover, the diameters of the back-side pressing roll 30a and the front-side pressing roll 30b are each preferably, but not particularly limited to, 100 mm or more and 500 mm or less, in view of maintenance and operational cost. When the shape of the metal sheet S is predicted, the shape of the metal sheet S at a position as close to the cooling start point SP as possible is also preferably predicted.

As Figs. 2 and 3 illustrate, the back-side pressing roll 30a and the front-side pressing roll 30b are disposed so as to move in the thickness direction of the metal sheet S. The pressing control device 40 controls the pressing directions and the pressing quantities of the back-side pressing roll 30a and the front-side pressing roll 30b. Further, the back-side pressing roll 30a and the front-side pressing roll 30b are preferably electrically driven to rotate in the circumferential direction to prevent a roll mark from occurring in the metal sheet S.

The pressing control device 40 of Fig. 1 controls, according to the warpage direction of the metal sheet S, the pressing quantities of the back-side pressing roll 30a and the front-side pressing roll 30b relative to the metal sheet S. The pressing control device 40 controls the pressing quantities so as to cause the pressing roll beside an outward-curving warped surface (the back-side pressing roll 30a or the front-side pressing roll 30b) to press the metal sheet S. For example, as Fig. 2 illustrates, when the metal sheet S has a warp curving to the front side, the pressing control device 40 causes the front-side pressing roll 30b to press the metal sheet S. On the other hand, as Fig. 3 illustrates, when the metal sheet S has a warp curving to the back side, the pressing control device 40 causes the back-side pressing roll 30a to press the metal sheet S.

Fig. 4 is a schematic view illustrating the definition of a warpage quantity d. The pressing control device 40 preferably controls, according to the warpage quantity d, the pressing quantities of the back-side pressing roll 30a and the front-side pressing roll 30b. When the shape measurement device 20 measures a warpage quantity d, the pressing control device 40 sets a pressing quantity Pd by using the warpage quantity d of the metal sheet S and causes the shape correction roll 30 to perform pressing (d = Pd). The pressing quantities of the back-side pressing roll 30a and the front-side pressing roll 30b are set with the pressing quantity in the case where the metal sheet S is passed linearly as a reference (0 mm). Thus, the pressing quantity is increased with increasing the warpage quantity d of the metal sheet S. Note that, when no warp in the metal sheet S is detected or estimated, the shape correction roll 30 is preferably moved back to a spot where the shape correction roll 30 is not in contact with the metal sheet S.

A quenching method and a method for manufacturing a steel sheet of the present invention will be described with reference to Fig. 1. First, the shape of the metal sheet S before quenching, that is, for example, the warpage direction and the warpage quantity d thereof are grasped. The shape correction roll 30 then performs pressing in the thickness direction of the metal sheet S according to the warpage direction of the metal sheet S. Specifically, when the metal sheet S has a warp curving to the front side, the front-side pressing roll 30b is pressed against the metal sheet S as Fig. 2 illustrates, and, when the metal sheet S has a warp curving to the back side, the back-side pressing roll 30a is pressed against the metal sheet S as Fig. 3 illustrates. At this point, the pressing quantity Pd is set so as to be equal to the warpage quantity d. Subsequently, the metal sheet S is cooled by the cooling device 10, and quenching is thus performed.

According to the above-described embodiment, the shape of the metal sheet S before quenching is grasped, and, according to the shape of the metal sheet S, the shape correction roll 30 performs pressing in the thickness direction of the metal sheet S. Thus, in the case where quenching is performed while the metal sheet S is continuously passed, even when the metal sheet before quenching is warped, warpage can be suppressed from occurring in the metal sheet after being quenched.

In the quenching of a metal sheet of the related art, when the metal sheet before quenching is already warped, the quenching further develops the warpage of the metal sheet. When warpage already occurs before quenching, the bending moment applied to the metal sheet through quenching acts so as to further develop the warpage because this is a resistance against a direction where the warpage is reduced. Thus, the warpage direction of the metal sheet before quenching and the warpage direction of the metal sheet after quenching are the same, and the warpage quantity becomes larger than before the quenching.

In the quenching of the related art, warpage occurring before quenching is not considered, and it is thus ideal to cool uniformly surfaces of a steel sheet to be cooled, that is, the front surface and the back surface. However, when occurrence of warpage is grasped in advance, it is possible to take measures for correcting the warpage according to the warpage. Accordingly, by being grasped, the warpage is corrected by the shape correction roll 30, and the cooling device 10 then performs quenching. Thus, even when the metal sheet S before quenching is warped, further warpage of the metal sheet during cooling is suppressed, and warpage can ultimately be suppressed from occurring in the metal sheet after being quenched.

Specifically, according to the present invention, it is possible to reduce intricacy, nonuniformity, and unevenness in a shape generated when a microstructure expands in volume due to martensitic transformation caused during the rapid cooling of the metal sheet S. Thus, when the metal sheet S is a high strength steel sheet (Haiten), an effect of suppressing deformation is increased. Specifically, the quenching apparatus 1 is preferably applied to the quenching for the metal sheet S that is a high strength steel sheet. More specifically, the quenching apparatus 1 is preferably applied to the manufacture of a steel sheet having a tensile strength of 580 MPa or more. The upper limit of the tensile strength may be, for example, but not particularly limited to, 2000 MPa or less. Examples of the above-described high strength steel sheet (Haiten) include a high strength cold rolled steel sheet, a hot-dip galvanized steel sheet (hot-dip zinc coated steel sheet) made of the high strength cold rolled steel sheet subjected to a surface treatment (coating treatment), an electro-galvanized steel sheet (electro zinc coated steel sheet), and a galvannealed steel sheet (alloyed hot-dip zinc coated steel sheet). Specific examples of the composition of the high strength steel sheet include an example where, in mass%, C is 0.04% or more and 0.35% or less, Si is 0.01% or more and 2.50% or less, Mn is 0.80% or more and 3.70% or less, P is 0.001% or more and 0.090% or less, S is 0.0001% or more and 0.0050% or less, and sol.Al is 0.005% or more and 0.065% or less; at least one of Cr, Mo, Nb, V, Ni, Cu, and Ti is each 0.5% or less, as required; B and Sb are each 0.01% or less, as further required; the remaining includes Fe and incidental impurities. Note that the embodiments of the present invention are not limited to the example where a steel sheet is quenched and are applicable to quenching for any metal sheet other than a steel sheet.

### EXAMPLE

A practical example of the present invention will be described. In Present examples 1 to 14, a high tensile cold rolled steel sheet having a thickness of 1.0 mm and a width of 1000 mm and whose tensile strength is in the 1470-MPa class was manufactured as the metal sheet S by using the quenching apparatus 1 of Fig. 1. In addition, the high tensile cold rolled steel sheet, whose tensile strength is in the 1470-MPa class, has a composition where, in mass%, C is 0.20%, Si is 1.0%, Mn is 2.3%, P is 0.005%, and S is 0.002%. Water served as the refrigerant CF, and the temperature of the water was 30°C.

On the other hand, in Comparative examples 1 to 6, the above-described high tensile cold rolled steel sheet was manufactured by using the quenching apparatus described in Patent Literature 1, but here the other conditions are the same as those of the present examples. In each of the apparatuses, the diameter of the shape correction roll is 100 mm. The relationship between the warpage quantity of the metal sheet S before quenching and the warpage quantity of the metal sheet S after quenching in each of Present examples 1 to 12 and Comparative examples 1 to 6 was measured. In Present examples 13 and 14, the "warpage direction" and the "warpage quantity" of the metal sheet S before quenching were not measured but were estimated to conduct the examples. Note that the definition of the warpage quantity d is illustrated in Fig. 4, and, in Present examples 1 to 12 and Comparative examples 1 to 6, it was judged that warpage suppression was achieved when the warpage quantity of the metal sheet S after quenching was less than or equal to the warpage quantity before quenching. In addition, in Present examples 13 and 14, it was judged that warpage suppression was achieved when the warpage quantity of the metal sheet S (following material) after quenching was less than or equal to the warpage quantity of the metal sheet S (leading material) after quenching. The warpage quantities of Present examples 1 to 14 and Comparative examples 1 to 6 are given in Table 1 below.

**Table 1**

| | Metal sheet before quenching | | Pressing quantity of shape correction roll (mm) | | Central axis-to-central axis distance L (mm) | Distance between cooling start point SP and front-side pressing roll 30b (mm) | Diameter of shape correction roll (mm) | Metal sheet after quenching | |
|---|---|---|---|---|---|---|---|---|---|
| | Warpage direction (Outward-curving direction) | Warpage quantity (mm) | Front side | Back side | | | | Warpage direction (Outward-curving direction) | Warpage quantity (mm) |
| Present example 1 | Front | 10 | 0 | 10 | 200 | 200 | 100 | Front | 3 |
| Present example 2 | Front | 10 | 0 | 10 | 200 | 400 | 100 | Front | 6 |
| Present example 3 | Front | 20 | 0 | 20 | 200 | 200 | 100 | Front | 3 |
| Present example 4 | Front | 20 | 0 | 20 | 200 | 400 | 100 | Front | 6 |
| Present example 5 | Front | 30 | 0 | 30 | 200 | 200 | 100 | Front | 3 |
| Present example 6 | Front | 30 | 0 | 30 | 200 | 600 | 100 | Front | 10 |
| Present example 7 | Back | 10 | 10 | 0 | 200 | 200 | 100 | Back | 3 |
| Present example 8 | Back | 10 | 10 | 0 | 100 | 400 | 100 | Back | 6 |
| Present example 9 | Back | 20 | 20 | 0 | 200 | 200 | 100 | Back | 3 |
| Present example 10 | Back | 20 | 20 | 0 | 1200 | 400 | 100 | Back | 12 |
| Present example 11 | Back | 30 | 30 | 0 | 200 | 200 | 100 | Back | 3 |
| Present example 12 | Back | 30 | 30 | 0 | 200 | 400 | 100 | Back | 6 |
| Present example 13 | Front* | 10* | 0 | 10 | 200 | 200 | 100 | Front | 12⇒3 |
| Present example 14 | Back* | 10* | 10 | 0 | 200 | 200 | 100 | Back | 13⇒3 |
| Comparative example 1 | Front | 10 | - | - | | - | 100 | Front | 20 |
| Comparative example 2 | Front | 20 | - | - | | - | 100 | Front | 30 |
| Comparative example 3 | Front | 30 | - | - | | - | 100 | Front | 40 |
| Comparative example 4 | Back | 10 | - | - | | - | 100 | Back | 20 |
| Comparative example 5 | Back | 20 | - | - | | - | 100 | Back | 30 |
| Comparative example 6 | Back | 30 | - | - | | - | 100 | Back | 40 |

| | | | | | | | | | |
|---|---|---|---|---|---|---|---|---|---|
| Note 1: "*" is an estimated value. Note 2: An "underlined number" denotes the warpage quantity of a leading material after quenching. A numerical value after "⇒" denotes the warpage quantity of a following material after quenching. | | | | | | | | | |

As given in Table 1, in Present examples 1 to 12, even when the metal sheet S before quenching was already warped, suppression of occurrence of warpage in the metal sheet S after being quenched was achieved. Note that, as in Present example 10, when the central axis-to-central axis distance is more than 1000 mm, the warpage of the metal sheet S before quenching can be corrected; however, some warp remains in the steel sheet after being quenched compared with when the central axis-to-central axis distance is less than or equal to 1000 mm. In addition, as in Present example 6, when the distance between the shape correction roll 30 (the front-side pressing roll 30b) and the cooling start point SP is more than 500 mm, the warpage of the metal sheet S before quenching is corrected; however, some warp remains in the steel sheet after being quenched compared with when the distance between the shape correction roll 30 (the front-side pressing roll 30b) and the cooling start point SP is less than or equal to 500 mm. On the other hand, in Comparative examples 1 to 6, when the steel sheet S before quenching was already warped, the warpage of the metal sheet S after quenching was developed.

In Present examples 13 and 14, the shape of the metal sheet S (following material) before quenching was estimated through, on a camera display, a visual review of the warpage direction and the warpage quantity of the metal sheet S (leading material) after being quenched. Specifically, the measurement of the warpage quantity of the metal sheet S (leading material) after being quenched was conducted as follows: the position where the warpage quantity was a maximum was detected through image analysis with images shot from edge sides of the metal sheet S (the sides of both ends in the width direction), and matching to the real scale was performed. In comparison with the average of the past manufacturing results (the warpage quantities after quenching), when the measured warpage quantity was larger, the presence of a warp in the shape of the metal sheet S before quenching was judged. Further, when the "presence of a warp" was judged, the warpage quantity before quenching was estimated based on the deviation of the measured warpage quantity from the average of the past manufacturing results (the warpage quantities after quenching) . Thus, it is preferable that manufacturing results are collected in advance, and the correlation between the deviation of the measured warpage quantity from the average of the manufacturing results (the warpage quantities after quenching) and the warpage quantity before quenching is grasped in advance. In addition, the warpage direction of the metal sheet S (following material) was estimated based on the warpage direction of the metal sheet S (leading material) on the assumption that the warpage direction of the metal sheet S is the same before and after quenching.

It was confirmed that adjusting the pressing directions and the pressing quantities of the shape correction rolls 30 relative to the front surface and the back surface of the metal sheet S (following material) based on the estimated "warpage direction" and "warpage quantity" of the metal sheet S (following material) before quenching can improve the warpage quantity of the after-quenching following material under the same condition. Note that the warpage quantity before quenching is not largely changed in the longitudinal direction in the same coil under the same manufacturing condition; thus, it was confirmed that the warpage quantity after quenching can be improved by, while checking the warpage quantity after quenching, judging the presence or absence of a warped shape and judging the warpage direction and the warpage quantity before quenching and then by adjusting the pressing direction and the pressing quantity of the shape correction roll 30 relative to the front surface or the back surface of the metal sheet S.

The present examples are intended to reduce warpage after quenching; however, when the permissible range of the warpage quantity of one surface (the front surface or the back surface) of the metal sheet S is narrow due to, for example, the facility convenience of the sheet passing path, adjustment of the warpage direction, such as changing the warpage direction to the side of the other surface (the back surface or the front surface), is possible.

### Reference Signs List

- 1: quenching apparatus
- 2: sink roll
- 10: cooling device
- 11: cooling tank
- 12: jet nozzle
- 20: shape measurement device
- 30: shape correction roll
- 30a: back-side pressing roll
- 30b: front-side pressing roll
- 40: pressing control device
- CF: refrigerant
- L: central axis-to-central axis distance
- Pd: pressing quantity
- S: metal sheet
- SP: cooling start point
- d: warpage quantity

## Claims

1. A quenching apparatus that cools a metal sheet, comprising:
a cooling device that performs quenching by cooling the metal sheet with a cooling fluid;
shape correction rolls that are provided beside a front surface and a back surface of the metal sheet and press, in a thickness direction of the metal sheet, the metal sheet before being quenched; and
a pressing control device that sets, based on a shape of the metal sheet before quenching, a pressing quantity of each of the shape correction rolls.

2. The quenching apparatus according to Claim 1, wherein the pressing control device causes the shape correction roll beside the front surface of the metal sheet to perform pressing when the metal sheet before quenching has a warp curving to the front surface side, and causes the shape correction roll beside the back surface of the metal sheet to perform pressing when the metal sheet before quenching has a warp curving to the back surface side.

3. The quenching apparatus according to Claim 1 or 2, further comprising
a shape measurement device that measures the shape of the metal sheet before being quenched.

4. The quenching apparatus according to Claim 3, wherein
the shape measurement device has a function of measuring a warpage quantity of the metal sheet, and
the pressing control device sets a measured warpage quantity of the metal sheet as the pressing quantity and controls the shape correction roll to perform pressing.

5. The quenching apparatus according to any one of Claims 1 to 4, wherein
the shape correction rolls beside the front surface and the back surface are disposed such that a central axis-to-central axis distance thereof is 100 mm or more and 1000 mm or less, and a distance between a start position of cooling performed by the cooling device and each of the shape correction rolls is within 500 mm.

6. A continuous annealing facility comprising
the quenching apparatus according to any one of Claims 1 to 5 beside an exit of a soaking zone.

7. A quenching method for performing quenching by cooling a metal sheet with a cooling fluid, the quenching method comprising:
grasping a shape of the metal sheet before being quenched; and,
based on the grasped shape of the metal sheet, pressing the metal sheet in a thickness direction by using shape correction rolls provided beside a front surface and a back surface of the metal sheet.

8. The quenching method according to Claim 7, comprising,
in the pressing the metal sheet in the thickness direction, causing the shape correction roll beside the front surface of the metal sheet to perform pressing when the metal sheet before quenching has a warp curving to the front surface side, and causing the shape correction roll beside the back surface of the metal sheet to perform pressing when the metal sheet before quenching has a warp curving to the back surface side.

9. The quenching method according to Claim 8, comprising,
in the grasping the shape of the metal sheet, grasping a warpage quantity and a warpage direction of the metal sheet, and,
in the pressing the metal sheet, causing the shape correction roll to perform pressing with the warpage quantity of the metal sheet being given as a pressing quantity.

10. A method for manufacturing a steel sheet, the method comprising,
by using the quenching method according to any one of Claims 7 to 9, quenching a steel sheet that is the metal sheet.

11. A method for manufacturing a coated steel sheet, the method comprising
performing a coating treatment on a cold rolled steel sheet manufactured by using the method for manufacturing a steel sheet according to Claim 10.

12. The method for manufacturing a coated steel sheet, according to Claim 11, wherein
the coating treatment is any one of a hot-dip zinc coating treatment, an electro zinc coating treatment, and a hot-dip zinc coating and alloying treatment.
